# EUROPEAN PATENT SPECIFICATION

(11) **EP 0 807 767 B1**
(45) Date of publication and mention of the grant of the patent: **02.10.2002**
(21) Application number: 97107810.0
(22) Date of filing: 13.05.1997
(51) Int. Cl.: F16F 9/348

(54) **Hydraulic shock absorber**
Hydraulischer Stossdämpfer
Amortisseur de chocs hydraulique

(30) Priority: 15.05.1996 JP 12032496
(43) Date of publication of application: 19.11.1997
(73) Proprietor: YAMAHA HATSUDOKI KABUSHIKI KAISHA, Iwata-shi Shizuoka-ken, 438 (JP)
(72) Inventor: Satou, Masahiro, Iwata-shi, Shizuoka-ken (JP)
(74) Representative: Grünecker, Kinkeldey, Stockmair & Schwanhäusser Anwaltssozietät

(56) References cited:
- EP-A- 0 632 212
- DE-A- 2 103 153
- FR-A- 1 367 698
- GB-A- 2 106 220
- GB-A- 2 157 808
- GB-A- 2 226 620
- US-A- 4 972 929

## Description

The present invention relates to a hydraulic shock absorber composed of a piston which is slidably installed inside a cylinder, said piston having a plurality of oil holes, a valve means on the compression-side and a valve means on the extension-side at least one thereof including a valve plate.

Hydraulic shock absorbers are known to the art which are composed of a piston having a plurality of oil holes being slidably inserted into an oil-filled cylinder, wherein the respective valves on the compression-side and the valve on the extension-side that open and close said oil holes consist of a stack of a plurality of valve plates. In hydraulic shock absorbers for vehicles, for example, the piston that follows the bumps and depressions in the road, slides inside the cylinder to generate oil flows that push open the compression-side valve or the extension-side valve to generate attenuating forces which absorb and dampen the shocks from the road surface, thereby contributing to improved riding comfort of the vehicle.

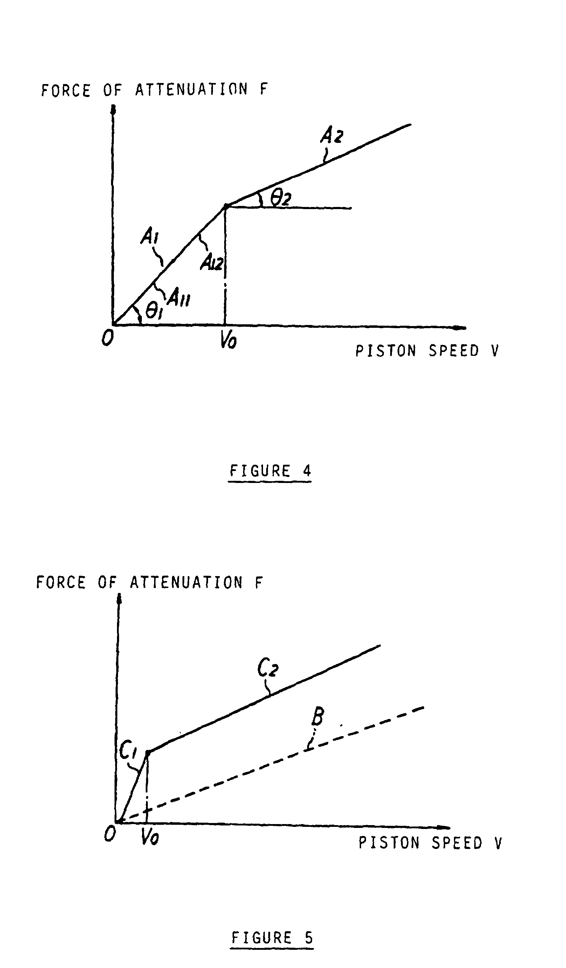

Line B in Figure 5 shows the attenuating force characteristics of such a hydraulic shock absorber, for example a shock absorber as previously known from FR-A-1 367 698, said document forming the generic clause of new claim 1. In Figures 5, the attenuation force F increases approximately linearly with respect to increases in the piston speed V.

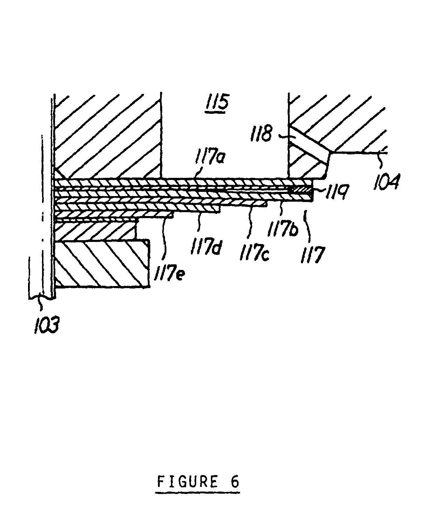

However, there are cases where a high attenuating force is required when the piston speed is in the short stroke range, and this requirement was met by the structure of the prior art shown in Figure 6.

To wit, Figure 6 shows an enlarged sectional view of the valve 117 on the extension-side of a conventional shock absorber. In the Figure, 104 is the piston which is affixed to the lower end of the rod 103, and said piston 104 has been slidably inserted into a cylinder that is not shown. Oil hole 115 has been bored into the piston, and said oil hole 115 is opened and closed on the bottom end opening near the extension-side valve 117. There is also a smaller diameter orifice 118 that is formed in the piston 104 that opens into the oil hole 115.

A stack of a plurality of valve plates 117a - 117e comprises the foregoing extension-side valve 117, and a shim 119 lies between adjacent valve plates 117a and 117b.

Then, because the ring-shaped shim 119 of this extension-side valve 117 bends and deforms the valve plates 117b - 117e that lie beneath it, as shown in the Figure, a specifically set load (preload) from the reaction force produced by this bending deformation of the valve plates 117b-117e is applied to the valve plate 117a, and said reaction force tends to keep said plate 117a in close contact with the bottom surface of the piston 104. Accordingly, when the piston 104 moves upward with respect to Figure 6 in its expansion stroke, there is a high level of oil pressure when the valve 117 begins to open. As is shown in Figure 5, keeping the extension-side valve 117 closed until the piston speed V reaches a certain value of V₀ causes the oil to flow only through the small diameter orifice 118 until that time, thereby generating a high attenuating force as shown by the line C₁ in Figure 5. Then, when the piston speed V exceeds the given value of V₀, the extension-side valve 117 opens to allow a large quantity of oil to flow through the oil hole 115, thereby increasing the shock absorption with increasing piston speed V as shown by line C₂ of the attenuating force F in Figure 5.

However , such conventional shock absorbers must affix the ring-shaped shim 119 in the outermost area of the circumference of the valve plates 117a, 117b, thereby making it impossible to vary the attenuating force characteristics to the desired level. In particular, this structure made it impossible to adjust the attenuating force characteristics as desired when the attenuating force F changed rapidly such as at the bend at point P on the curve (piston speed V₀ when the valve 117 on the extension-side begins opening).

The present invention deals with this problem and has as its objective, the creation of hydraulic shock absorbers that can provide the desired attenuating force.

According to the present invention, this objective has been performed by a hydraulic shock absorber as defined in claim 1.

According to a preferred embodiment, the foregoing ring-shaped shim being fitted to and retained by the outer circumference of a thinner valve plate.

Because the outside circumferential surface of the foregoing ring-shaped shim, when viewed from the axial direction of the foregoing piston, is positioned inside an imaginary circumcircle around the oil holes provided in said piston, it is possible to adjust the set load on the valve and the amount of bending deformation on the valve plate as desired, thereby making it possible to obtain the desired attenuating characteristics at points on the curve where the attenuating force changes rapidly (at the piston speed where the valve begins opening) or when one desires to change the attenuating force.

By fitting the ring-shaped shim around a thinner valve plate, it is possible to assure that it is concentric with respect to the other valve plates, and in addition, it is possible to adjust the attenuating force characteristics by varying the thickness of the valve plate that holds said ring-shaped shim.

The present invention will be explained below based upon the attached figures, which show an embodiment of the invention, wherein:
**Figure 1** is a vertical sectional view of the principal parts of a hydraulic shock absorber according to this invention,
**Figure 2** is an enlargement of the piston area showing the principal parts of a hydraulic shock absorber according to this invention;
**Figure 3** is an enlarged, detail figure showing the X area of Figure 2;
**Figure 4** is a figure showing the attenuation force characteristics on the extension-side of a hydraulic shock absorber according to this invention;
**Figure 5** is an enlarged sectional view of the extension-side valve of a conventional hydraulic shock absorber; and
**Figure 6** is a figure showing the attenuation force characteristics of a conventional hydraulic shock absorber.

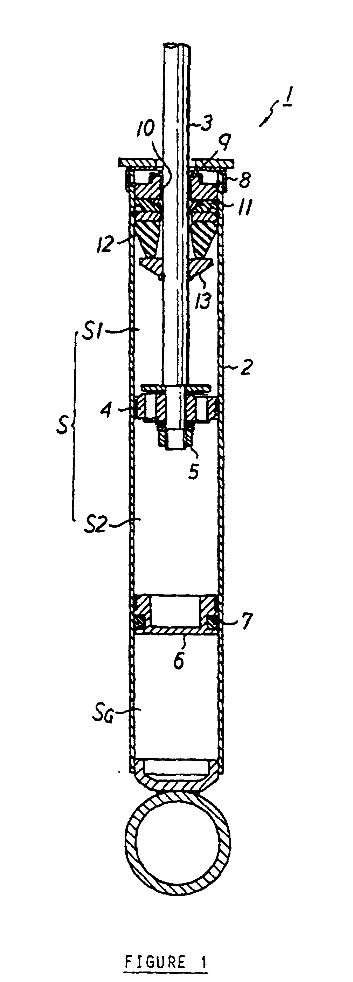

The hydraulic shock absorber 1 shown in Figure 1 is a hydraulic shock absorber for vehicles. It consists of a rod 3 that is inserted from the top into the cylinder 2, and a piston 4 free to slide vertically within the cylinder 3 is attached to the lower end of said rod 3 by a nut 5. The bottom end of the cylinder 2 is attached to a wheel-side, and the top end of the rod 3 is attached to the frame side of a vehicle that is not shown.

Further, there is a free piston 6 beneath the piston 4 inside the foregoing cylinder 2 that can slide up and down therein, and said free piston 6 divides the inside of the cylinder 2 into a top oil chamber S and a bottom gas chamber S_{G}. The oil chamber S is further divided by the piston 4 into an upper chamber S1 and a lower changer S2. The oil chamber S is filled with oil, and the gas chamber S_{G} is filled with an inactive gas such as nitrogen. An O-ring is retained around the outside circumference of the free piston 6.

On the other hand, the top end of the cylinder 2 is covered by a cap 8, and installed on the inside upper end of said cylinder 2 are: a dust seal 9, against which slides the outside circumference of the foregoing rod 3; a slide bushing 10 and oil seal 11 as well as a reaction-force stopper 12 that is made of a resilient material such as rubber. A stop plate 13 that is in contact with the foregoing reaction-force stopper 12 and that restricts the upward stroke of the rod 3 is installed in the middle area of the rod 3.

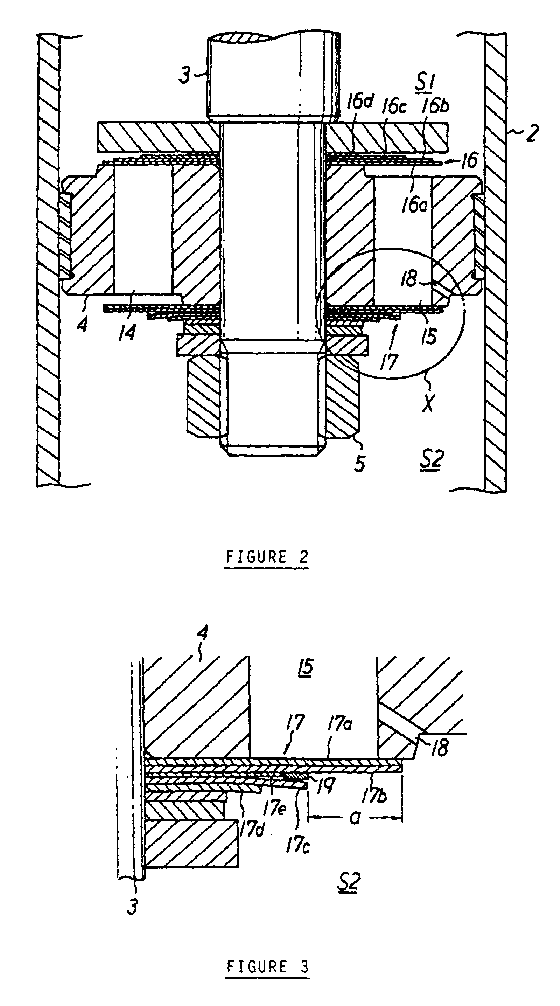

Also, as is shown in detail in Figure 2, a plurality of oil holes 14, 15 have been bored through the foregoing piston 4, and mounted on the top and bottom surfaces of this piston 4 are a compression-side valve 16 and an extension-side valve 17, respectively. The one oil hole 14 is opened and closed on the top by the compression-side valve 16, and at its bottom, it opens into the lower chamber S2. The other oil hole 15 opens at the top into the into the upper chamber S1, and is opened and closed at its bottom by the extension-side valve 17. When said hydraulic shock absorber 1 is not operating, the compression-side valve 16 as well as the extension-side valve 17 remain closed, respectively, as is shown in Figure 2. A small diameter orifice 18 is formed in the piston 16 that bypasses the extension-side valve 17 and constantly maintains a passage between the oil hole 15 and the lower chamber S2.

The foregoing compression-side valve is composed of a plurality of stacked valve plates 16a, 16b, 16c, and 16d which are of varying diameter. Similarly, the extension-side valve 17 is composed of a plurality of stacked valve plates 17a, 17b, 17c, and 17d which are of varying diameter. However, as shown in detail in Figure 3, there is a narrow width, ring-shaped shim 19 disposed between the large diameter valve plate 17b and the small diameter valve plate 17c. This ring-shaped shim is retained on the outside circumference of the valve plate 17e, which is thinner than the shim 19, and the outside circumferential surface of the shim 19, when viewed from the axial direction of the piston, lies within an imaginary circumcircle around the oil holes 15.

Thus, on the extension-side valve 17, the foregoing ring-shaped shim 19 causes the smaller diameter valve plates 17c, 17d to bend as shown in the Figure, and the reaction-force force generated by this bending of the valve plates 17c, 17d imparts the desired set load (pre-load) at the ring-shaped shim 19 to the other larger diameter valve plates 17a, 17b. Only the areas of the large diameter valve plates 17a, 17b that lie outside the ring-shaped shim (the *a* area in Figure 3) do not receive this set load, and may be freely bent.

Next, the operation of this hydraulic shock absorber will be explained.

During the compression stroke, the rod 3 and the piston 4 attached to it descend within the cylinder 2. Due to the low piston speed V, the compression-side valve 16 remains closed, and during the initial period of the stroke, the oil in the lower chamber S2 flows through the orifice 18 and the oil hole 15 into the upper chamber S1. The attenuating forces generated at this time effectively absorb the shocks due to slight irregularities in the road surface.

When, however, the piston speed V increases, then the oil inside the lower chamber S2, due to the pressure differential between the two chambers S1, S2, pushes open the compression-side valve 16, thereby creating an additional oil flow into the upper chamber S1 through the oil hole 14. At this time, the fluidity loss (energy loss) of the oil generates the required attenuating forces to allow the wheel to absorb and dampen the shock it receives from the road surface, thereby contributing to the improved ride of the vehicle. During this compression stroke, the gas inside the gas chamber S_{G} becomes compressed due to the entry of the rod 3 into the cylinder 2, and the descent of the free piston 6 reduces the volume of the gas chamber S_{G} by an amount equivalent to the rod entry volume.

On the other hand, during the extension stroke, when the rod 3 and the piston 4 attached to it rise within the cylinder 2, if the piston speed V is low, then the extension-side valve 17 is closed, and during the initial phase of the stroke, the oil inside the upper chamber S1 passes through the orifice 18 into the lower chamber S2. The attenuating forces generated at this time effectively absorb the shock from the slight irregularities in the road surface. At this time, the attenuating force F that is generated increases with the piston speed V in the manner shown by the line A₁₁ in Figure 4.

When the piston speed V increases, the pressure of the oil inside the upper chamber S1 increases further, causing the oil to push open the outside circumferential area (the *a* area shown in Figure 3) of the large diameter valve plates 17a, 17b and flow into the lower chamber S2. In this case, oil is also flowing through the orifice 18, and, as shown in Figure 4, there is a short stroke range for the valve speed V up to the value V₀ for the piston speed, wherein only the outer circumferential areas of the valve plates 17a, 17b (the *a* area of Figure 3) are opened; the attenuating force F generated in that range increases with the piston speed V relatively rapidly as shown by the line A₁₂ of Figure 4.

After that, when the piston speed V reaches the set value V₀, the extension-side valve 17 opens completely to allow a large amount of oil to flow from the upper chamber S1 through the oil hole 15 into the lower chamber S2. The attenuating force at that time increases slowly in response to increases in the piston speed V as shown by the line A₂ in Figure 5. During this extension stroke, the retraction of the rod 3 from the cylinder 2 causes the gas inside the gas chamber S_{G} to expand, which in turn causes the free piston 6 to rise and increase the volume of the gas chamber S_{G} by an amount equivalent to the retraction of the rod 3.

In the present embodiment, the outside circumferential surface of the ring-shaped shim 19, when viewed in the axial direction of the piston, lies inside an circumcircle around the oil hole 15, which makes it possible to bend the valve plates 17c, 17d to impart the desired set load applied to the large diameter valve plates 17a, 17b of the extension-side valve 17, thereby making it possible to adjust the desired attenuation force characteristics at the bend point P where the attenuation force changes (at the piston speed V₀ where the extension-side valve 17 begins opening) and to vary the rate of change in the attenuation force F (in Figure 4, the slopes θ₁, θ₂ of the graph curves A₁, A₂, respectively).

Further, the present embodiment retains the ring-shaped shim 19 on the outside circumference of a valve plate 17e which is thinner than the shim 19, thereby making it possible to accurately position said ring-shaped shim concentrically with respect to the other valve plates 17a - 17d. It is further possible to adjust the attenuating force as desired by varying the thickness of the valve plate 17e that holds said ring-shaped shim 19.

The foregoing explanation described the ring-shaped shim being mounted on the extension-side valve 17, but it is of course possible to mount the ring-shaped shim on the compression-side valve 16.

As is apparent from the foregoing explanation, due to the present invention's creation of hydraulic shock absorbers having a structure wherein: a plurality of oil holes are bored in a piston that is slidably inserted into the cylinder; compression-side or extension-side valves consisting of a stack of a plurality of valve plates, open and close said oil holes; and a ring-shaped shim is disposed between adjacent valve plates on at least one of the valves; wherein the structure is such that when viewed from the axial direction of the piston, the outside circumferential surface of the foregoing ring-shaped shim is positioned inside a circle circumscribed around the oil holes in said piston, it is possible to adjust the amount of bending deformation applied to the valve as desired to adjust the preset load on the valve, thereby making it possible to vary the rate of change of the attenuation force at the point in the attenuation force curve where there is a rapid change.

## Claims

1. Hydraulic shock absorber comprising:
a piston (4) which is slidably installed inside a cylinder, said piston (4) having a plurality of oil holes (14,15),
a valve means (17) on the compression-side and a valve means (16) on the extension-side at least one thereof including a valve plate (17a) and
a valve plate urging means urging said valve plate (17a) towards a closing position,
**characterized in that**
said urging means are constituted by a ring-shaped shim (19) which, when viewed from an axial direction of said piston (4) is positioned inside an imaginary circumcircle around said oil holes (15) so as to apply an urging force acting on said valve plate (17a) inside said imaginary circumcircle around said oil holes (15).

2. Hydraulic shock absorber according to claim 1, wherein at least one of said valve means (16,17) is constituted by a stack of valve plates (16a..16d,17a..17d) that opens and closes said holes (14,15).

3. Hydraulic shock absorber according to claim 1, wherein said ring-shaped shim (19) is disposed between adjacent valve plates (17b,17c) of at least one of said valve means (16, 17).

4. Hydraulic shock absorber according to claim 1 or 3, wherein said ring-shaped shim (19) being fitted to and retained by the outer circumference of a thinner valve plate (17e).

5. Hydraulic shock absorber according to at least one of claims 1 to 4, wherein at least one stack of said valve means (16,17) includes two or more valve plates (17a,17b) extending over said imaginary circumcircle around the oil holes (15).

6. Hydraulic shock absorber according to at least one of claims 1 to 5, wherein said ring-shaped shim (19) is disposed between a valve plate (17c) having an outer diameter smaller than said imaginary circumcircle around the oil holes (15) and a valve plate (17b) having an outer diameter equal to or larger than said imaginary circumcircle around the holes (15).

7. Hydraulic shock absorber according to at least one of claims 1 to 6, wherein said ring-shaped shim (19) has an outer diameter equal to or less than the diameter of an imaginary circumcircle extending substantially through the center lines of the oil holes (15).

8. Hydraulic shock absorber according to at least one of claims 1 to 7, wherein said stack of valve plates includes a first valve plate (17a) and a second valve plate (17b) both having an outer diameter equal to or larger than the outer diameter of said imaginary circumcircle around said oil holes (15), a third valve plate (17c) and a fourth valve plate (17d) both having an outer diameter smaller than said imaginary circumcircle around the oil holes (15), said ring-shaped shim (19) being provided between said second valve plate (17b) and one of said third or fourth valve plates (17c, 17d).

9. Hydraulic shock absorber according to claim 8, wherein said fourth valve plate (17d) has a diameter smaller than the outer diameter of said third valve plate (17c).

10. Hydraulic shock absorber according to at least one of claims 1 to 9, wherein said fourth valve plate (17d) has an outer diameter corresponding substantially to the diameter of an imaginary inscribed circle defined by said holes (15).

11. Hydraulic shock absorber according to at least one of claims 1 to 10, wherein said fourth valve plate (17d) has an axial thickness equal to or greater than the axial thickness of said third valve plate (17c).

12. Hydraulic shock absorber according to at least one of claims 1 to 11, wherein a radius difference between said third valve plate (17c) and said fourth valve plate (17d) is smaller than a radius difference (a) between said third valve plate (17c) and said first valve plate (17a).

## Patentansprüche

1. Hydraulischer Stoßdämpfer mit:
einem Kolben (4), der verschieblich in einem Zylinder angeordnet ist, wobei der Kolben (4) mehrere Öllöcher (14,15) aufweist,
einer Ventileinrichtung (17) auf der Kompressionsseite und einer Ventileinrichtung (16) auf der Ausdehnungsseite, von denen wenigstens eine eine Ventilplatte (17a) und eine Ventilplattenvorspanneinrichtung, welche die Ventilplatte (17a) in eine Verschlussposition stellt,
**dadurch gekennzeichnet,**
**dass** die Vorspanneinrichtung durch ein ringförmiges Klemmstück (19) gebildet ist, welches bei einer bezogen auf den Kolben (4) axialen Blickrichtung innerhalb eines gedachten Umkreises um die Öllöcher (15) angeordnet ist, um eine Stellkraft auf die Ventilplatte (17a) innerhalb des gedachten Umkreises um die Öllöcher (15) aufzubringen.

2. Hydraulischer Stoßdämpfer nach Anspruch 1, **dadurch gekennzeichnet, dass** wenigstens eine der Ventileinrichtungen (16,17) durch einen Stapel von Ventilplatten (16a..16d,17a..17d) gebildet ist, welcher die Löcher (14,15) öffnet und schließt.

3. Hydraulischer Stoßdämpfer nach Anspruch 1, **dadurch gekennzeichnet, dass** das ringförmige Klemmstück (19) zwischen benachbarten Ventilplatten (17b,17c) von wenigstens einer der Ventileinrichtungen (16,17) angeordnet ist.

4. Hydraulischer Stoßdämpfer nach Anspruch 1 oder 3, **dadurch gekennzeichnet, dass** das ringförmige Klemmstück (19) auf eine dünnere Ventilplatte (17a) angepasst und durch den äußeren Umfang derselben gehalten ist.

5. Hydraulischer Stoßdämpfer nach wenigstens einem der Ansprüche 1 bis 4, **dadurch gekennzeichnet, dass** wenigstens ein Stapel der Ventileinrichtungen (16,17) zwei oder mehr Ventilplatten (17a,17b) umfasst, die sich über den gedachten Umkreis um die Öllöcher (15) erstrecken.

6. Hydraulischer Stoßdämpfer nach wenigstens einem der Ansprüche 1 bis 5, **dadurch gekennzeichnet, dass** das ringförmige Klemmstück (19) zwischen einer Ventilplatte (17c), welche einen äußeren Durchmesser hat, der kleiner als der gedachte Umkreis um die Öllöcher (15) ist, und einer Ventilplatte (17b), die einen äußeren Durchmesser hat, welcher gleich oder größer als der gedachte Umkreis um die Öllöcher (15) ist, angeordnet ist.

7. Hydraulischer Stoßdämpfer nach wenigstens einem der Ansprüche 1 bis 6, **dadurch gekennzeichnet, dass** das ringförmige Klemmstück (19) einen Außendurchmesser aufweist, der so groß oder kleiner als der Durchmesser eines gedachten Umkreises ist, der sich im wesentlichen durch die Mittelachsen der Öllöcher (15) erstreckt.

8. Hydraulischer Stoßdämpfer nach wenigstens einem der Ansprüche 1 bis 7, **dadurch gekennzeichnet, dass** der Stapel von Ventilplatten eine erste Ventilplatte (17a) und eine zweite Ventilplatte (17b), deren äußerer Durchmesser jeweils gleich oder größer als der äußere Durchmesser des gedachten Umkreises um die Öllöcher (15) ist, eine dritte Ventilplatte (17c) und eine vierte Ventilplatte (17d) umfasst, die jeweils einen äußeren Durchmesser aufweisen, der geringer als der gedachte Umkreis um die Öllöcher (15) ist, und dass das ringförmige Klemmstück (19) zwischen der zweiten Ventilplatte (17b) und einer der dritten oder vierten Ventilplatte (17c,17d) vorgesehen ist.

9. Hydraulischer Stoßdämpfer nach Anspruch 8, **dadurch gekennzeichnet, dass** die vierte Ventilplatte (17d) einen Durchmesser aufweist, der geringer als der äußere Durchmesser der dritten Ventilplatte (17c) ist.

10. Hydraulischer Stoßdämpfer nach wenigstens einem der Ansprüche 1 bis 9, **dadurch gekennzeichnet, dass** die vierte Ventilplatte (17d) einen äußeren Durchmesser aufweist, der im wesentlichen dem Durchmesser eines gedachten eingeschriebenen Kreises, der durch die Löcher (15) vorgegeben ist, entspricht.

11. Hydraulischer Stoßdämpfer nach wenigstens einem der Ansprüche 1 bis 10, **dadurch gekennzeichnet, dass** die vierte Ventilplatte (17d) eine axiale Dicke hat, die gleich oder größer als die axiale Dicke der dritten Ventilplatte (17c) ist.

12. Hydraulischer Stoßdämpfer nach wenigstens einem der Ansprüche 1 bis 11, **dadurch gekennzeichnet, dass** eine Radiusdifferenz zwischen der dritten Ventilplatte (17c) und der vierten Ventilplatte (17d) geringer als eine Radiusdifferenz (a) zwischen der dritten Ventilplatte (17c) und der vierten Ventilplatte (17a) ist.

## Revendications

1. Amortisseur de chocs hydraulique, comprenant :
un piston (4), monté de façon à pouvoir coulisser à l'intérieur d'un cylindre, ledit piston (4) ayant une pluralité de trous à huile (14, 15),
des moyens de soupape (17) sur le côté compression et des moyens de soupape (16) du côté extension, dont au moins l'un comprend une plaque formant opercule de soupape (17a), et des moyens de placage de plaque d'opercule de soupape poussant ladite plaque d'opercule de soupape (17a) vers une position de fermeture,
**caractérisé en ce que**
lesdits moyens de placage sont constitués par une bordure (19) à forme annulaire qui, lorsqu'on l'observe dans la direction axiale dudit piston (4), est placée à l'intérieur d'un cercle de délimitation imaginaire tracé autour desdits trous à huile (15), pour appliquer une force de placage agissant sur ladite plaque formant opercule de soupape (17a), à l'intérieur dudit cercle de délimitation imaginaire tracé autour desdits trous à huile (15).

2. Amortisseur de chocs hydraulique selon la revendication 1, dans lequel au moins l'un desdits moyens formant opercule de soupape (16,17) est formé d'un empilement de plaques d'opercule de soupape (16a..16d,17a..17d) qui ouvre et ferme lesdits trous (14,15).

3. Amortisseur de chocs hydraulique selon la revendication 1, dans lequel ladite bordure (19) à forme annulaire est disposée entre des plaques d'opercule de soupape (17b,17c) adjacentes d'au moins un desdits moyens formant soupape (16, 17).

4. Amortisseur de chocs hydraulique selon la revendication 1 ou 3, dans lequel ladite bordure (19) à forme annulaire est ajustée sur et retenue par la circonférence extérieure d'une plaque formant opercule de soupape (17e) plus mince.

5. Amortisseur de chocs hydraulique selon au moins l'une des revendications 1 à 4, dans lequel au moins un empilement desdits moyens de soupape (16,17) comprend deux plaques d'opercule de soupape (17a,17b) ou plus s'étendant sur ledit cercle de délimitation imaginaire autour des trous à huile (15).

6. Amortisseur de chocs hydraulique selon au moins l'une des revendications 1 à 5, dans lequel ladite bordure (19) de forme annulaire est disposée entre une plaque formant opercule de soupape (17a) ayant un diamètre extérieur inférieur à celui dudit cercle de délimitation imaginaire tracé autour des trous à huile (15) et une plaque d'opercule de soupape (17b) ayant un diamètre extérieur égal ou supérieur à celui dudit cercle de délimitation imaginaire tracé autour des trous (15).

7. Amortisseur de chocs hydraulique selon au moins l'une des revendications 1 à 6, dans lequel ladite bordure (19) à forme annulaire a un diamètre extérieur égal ou inférieur au diamètre d'un cercle de délimitation imaginaire s'étendant en passant sensiblement par les axes des trous à huile (15).

8. Amortisseur de chocs hydraulique selon au moins l'une des revendications 1 à 7, dans lequel ledit empilement de plaques d'opercule de soupape comprend une première plaque d'opercule de soupape (17a) et une deuxième plaque d'opercule de soupape (17b), les deux ayant un diamètre extérieur égal ou supérieur au diamètre extérieur dudit cercle de délimitation imaginaire tracé autour desdits trous à huile (15), une troisième plaque d'opercule de soupape (17c) et une quatrième plaque d'opercule de soupape (17d), les deux ayant un diamètre extérieur inférieur audit cercle de délimitation imaginaire tracé autour des trous à huile (15), ladite bordure en forme annulaire (19) étant prévue entre ladite deuxième plaque d'opercule de soupape (17b) et l'une desdites troisième ou quatrième plaque d'opercule de soupape (17c,17d).

9. Amortisseur de chocs hydraulique selon la revendication 8, dans lequel ladite quatrième plaque d'opercule de soupape (17d) a un diamètre inférieur au diamètre extérieur de ladite troisième plaque d'opercule de soupape (17c).

10. Amortisseur de chocs hydraulique selon au moins l'une des revendications 1 à 9, dans lequel ladite quatrième plaque d'opercule de soupape (17d) a un diamètre extérieur correspondant sensiblement au diamètre d'un cercle inscrit imaginaire défini par lesdits trous (15).

11. Amortisseur de chocs hydraulique selon au moins l'une des revendications 1 à 10, dans lequel ladite quatrième plaque d'opercule de soupape (17d) a une épaisseur axiale égale ou supérieure à l'épaisseur axiale de ladite troisième plaque d'opercule de soupape (17c).

12. Amortisseur de chocs hydraulique selon au moins l'une des revendications 1 à 11, dans lequel la différence de rayon entre ladite troisième plaque d'opercule de soupape (17c) et ladite quatrième plaque d'opercule de soupape (17d) est inférieure à une différence de rayon (a) entre ladite troisième plaque d'opercule de soupape (17c) et ladite première plaque d'opercule de soupape (17a).
